# EUROPEAN PATENT APPLICATION

(11) **EP 4 506 843 A1**
(43) Date of publication of application: **12.02.2025**
(21) Application number: 24184594.0
(22) Date of filing: 26.06.2024
(51) Int. Cl.: G06F 21/53, G06F 3/06, G06F 8/61, G06F 9/455, G06F 16/182, G06F 21/62, H04L 9/40

(54) **METHODS AND APPARATUS FOR CONTAINER DEPLOYMENT IN A NETWORK-CONSTRAINED ENVIRONMENT**

(30) Priority: 08.08.2023 WO PCT/CN2023/111667; 18.12.2023 US 202318544137
(71) Applicant: Intel Corporation, Santa Clara, CA 95054 (US)
(72) Inventor: WANG, Yi, Shanghai 200120 (CN); SUN, Yih Leong, Beaverton 97006 (US); CONNOR, Patrick L., Beaverton 97007 (US)
(74) Representative: Maiwald GmbH

(57) **Abstract**

Systems, apparatus, articles of manufacture, and methods are disclosed for deployment of a container in a network-constrained environment. An example apparatus includes interface circuitry, machine readable instructions, and programmable circuitry to at least one of instantiate or execute the machine readable instructions to access a first unencrypted shared file, access a second encrypted file, create a third file by integrating contents of the first file and the second file, the third file being a Virtual Execution Environment (VEE) image, store the third file, and deploy the third file to a container runtime environment for execution.

## Description

### RELATED APPLICATIONS

This patent arises from the national stage of International Application No. PCT/CN2023/111667, which was filed on August 8, 2023. International Application No. PCT/CN2023/111667 is hereby incorporated herein by reference in its entirety. Priority to International Application No. PCT/CN2023/111667 is hereby claimed.

### FIELD OF THE DISCLOSURE

This disclosure relates generally to computing virtualization and, more particularly, to methods and apparatus for container deployment in a network-constrained environment.

### BACKGROUND

Computing virtualization is the use of a virtualized or simulated computing environment, as opposed to a physical environment. Virtualization often utilizes simulated versions of hardware, operating systems, peripherals, etc. Containers are a form of virtualization. A container typically includes executables, binary code, libraries, configuration files, etc. to enable execution of a specific task and/or program.

### BRIEF DESCRIPTION OF THE DRAWINGS

FIG. 1 is an example container image format illustrating a supplemental layer and a common layer.
FIG. 2 is an example environment for launching an application.
FIG. 3 is a block diagram for implementing the application launcher circuitry of FIG. 2.
FIGS. 4 and 5 are flowcharts representative of example machine readable instructions and/or example operations that may be executed, instantiated, and/or performed by example programmable circuitry to implement the application launcher circuitry of FIG. 2.
FIG. 6 is an example implementation of an open-source project using the application launcher circuitry of FIG. 2.
FIG. 7 is an example per-layer encryption approach.
FIG. 8 is an alternative container image format using the per-layer encryption approach of FIG. 7.
FIG. 9 is a block diagram of an example processing platform including programmable circuitry structured to execute, instantiate, and/or perform the example machine readable instructions and/or perform the example operations of FIGS. 3 and/or 4 to implement the application launcher circuitry of FIG. 2.
FIG. 10 is a block diagram of an example implementation of the programmable circuitry of FIG. 9.
FIG. 11 is a block diagram of another example implementation of the programmable circuitry of FIG. 9.

In general, the same reference numbers will be used throughout the drawing(s) and accompanying written description to refer to the same or like parts. The figures are not necessarily to scale.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

### DETAILED DESCRIPTION

To deploy a container-based application on a computing device, a container image must be transmitted from an image repository (e.g., a remote image repository) to the local file structure. The size of a container image is usually on the order of a few hundred megabytes, possibly up to several gigabytes. If the computing device is operated in a network-constrained environment, such as an edge cloud, the transmission of container images brings a heavy burden on the network. An edge cloud is likely to host a wide variety of edge applications. This makes the situation even worse and results in a large latency of launching an application at the edge.

In existing container image format standards, a container image may include multiple layers. The content of each layer is uniquely identified by a hash value calculated from a common algorithm. When retrieving a container image, bandwidth used for the transmission of some layers could be saved if same identifiers could be found in locally cached layers, which had been previously retrieved.

Each image layer could contain many files. For two layers, even if there is only one different file, the identifiers of the two layers will be different, which greatly reduce the benefit of layer reuse.

In examples disclosed herein, a container image format is used which defines two kinds of layers: a supplemental layer and a common layer. Supplemental layers contain a computed identifier associated with each file instead of real file content. In some examples, the computed identifier includes hash values. Common layers contain real file content. Any number of common layers and/or supplemental layers may be included in a container. For example, a container may include a single common layer and a single supplemental layer. Alternatively, a single common layer and two or more supplemental layers may be used. As a further example, two or more common layers and a single supplemental layer may be used.

Examples disclosed herein maintain a local file pool for common files. Each file is identified by a hash value.

In examples disclosed herein, a container launcher requests common files from the local file pool when needed during launching of an application or building of a local file structure to launch/execute an application. In some examples, the container launcher implements a Virtual Execution Environment (VEE) such as a container image, a virtual machine, an operating system, etc.

Examples disclosed herein reduce the amount of data to be transmitted for a container image (e.g., saving bandwidth), reduce the latency of launching a container-based application (e.g., improves the system performance), and enables a fast application upgrade and rollback solutions.

Container-based applications are usually built on top of popular OS image(s), like CentOS, Ubuntu, BusyBox, Alpine, etc. There are a great number of files shared among those applications. Example approaches disclosed herein propose a container image format to make those shared files fully sharable at a network-constrained environment, such as an edge cloud.

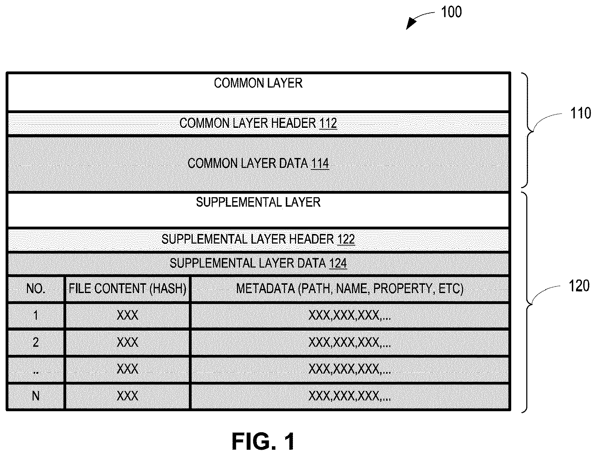

FIG. 1 is an example container image 100 including a common layer 110 and a supplemental layer 120. In the example of FIG. 1, the supplemental layer 120 is layered underneath (e.g., subsequent/after) the common layer 110.

For the common layer(s) 110, the layer format defined in an existing container image format is utilized. The common layer 110 is a layer whose content is addressable by an identifier. This kind of layer contains real files. The common layer 110 is suitable for base OS layer and a layer for specific application binaries. The common layer 110 of FIG. 1 includes a common layer header 112 and common layer data 114. The common layer header 112 includes general information about the common layer 110 such as how much data is stored in the layer, identification information (e.g., location) of the source of the data, etc. Examples of data stored in the monolithic later data 114 include, but are not limited to, file identifiers, file structures, file address locations, etc.

The supplemental layer 120 includes a supplemental layer header 122 and supplemental layer data 124. In examples disclosed herein, the supplemental layer 120 supplements (e.g., adds, subtracts, replaces, etc.) the common layer 110 to launch/execute an application. In some examples, the supplemental layer header 122 includes general information about the supplemental layer 120 such as how much data is stored in the layer, identification information (e.g., location) of the source of the data, etc.

In the example of FIG. 1, the supplemental layer data 124 can include file structures, hash values, metadata, etc. In the example of FIG. 1, each file associated with the supplemental layer 120 is represented by a hash value plus some metadata information, such as file name, path, property, etc. In operation, the supplemental layer 120 is suitable for layers with common dependencies, such as common libraries, tools, etc.

In some examples, the container image 100 is created using a first file associated with the common layer 110 and a second file associated with the supplemental layer 120. In such an example, the container image 100 is created by incorporating the first file and the second file (e.g., combining, concatenating, supplementing, etc.). The first file is accessed from a storage device (e.g., a non-transitory computer readable medium) and the second file is also accessed from the storage device. The container image 100 is also referred to as a third file in this example.

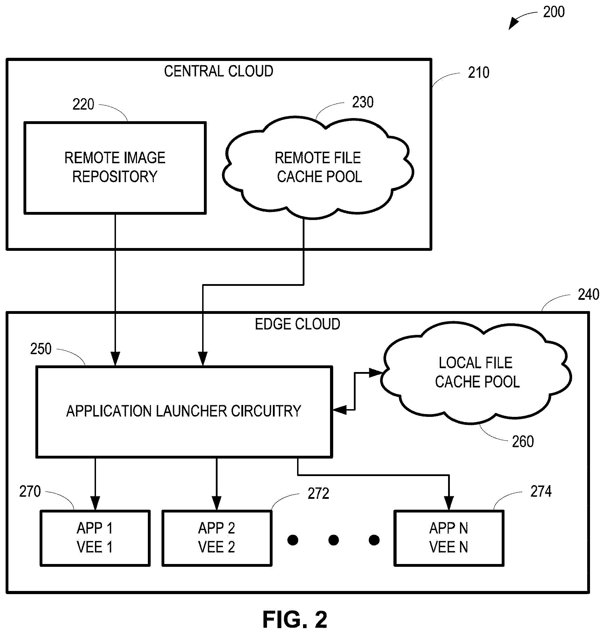

FIG. 2 is an example environment 200 for launching an application. In the illustrated example of FIG. 2, a central cloud 210 communicates with an edge cloud 240 via a network connection, a remote connection, a wireless connection, etc.

The example central cloud 210 includes a remote image repository 220 and a remote file cache pool 230. The remote image repository 220 houses the container image (e.g., the container image 100). In some examples, the remote image repository 220 stores all container images within an environment and can be accessed by the edge cloud 240. In examples disclosed herein, the remote image repository 220 populates the common layer 110 and the supplemental layer 120.

The remote file cache pool 230 houses cached files to be accessed by the edge cloud 240. In some examples, the remote file cache pool 230 houses cached files for the entirety of an environment, allowing the edge cloud 240 to access cached files that are not available to the edge cloud 240 locally. In examples disclosed herein, a first file associated with the common layer 110 and/or a second file associated with the supplemental layer 120 may be stored in the remote file cache pool 230. In some examples, the first file and the second file correspond to a data structure representing the container image 100.

In the illustrated example of FIG. 2, the edge cloud 240 includes an application launcher 250, a local file cache pool 260 and a plurality of applications 270, 272, 274. While the example of FIG. 2 shows more than one application, examples disclosed herein can operate in an environment with a single application to execute/launch.

The application launcher circuitry 250 executes/launches applications in the edge cloud 240. To launch an application in the edge cloud 240, the application launcher circuitry 250 pulls (e.g., retrieves, obtains, requests, etc.) the container image 100 of the application 270, 272, 274 from the remote image repository 220. In some examples, the size of the image is relatively small (e.g., less than 300 megabytes). The application launcher circuitry 250 parses the container image 100 and starts to build a file structure for the application(s) 270, 272, 274 based on the files associated with the common layer 110 and the supplemental layer 120.

The local file cache pool 260 includes locally cached files corresponding to hash values and/or metadata. These locally cached files can be retrieved by the application launcher circuitry 250 to build the file structure for the application(s) 270, 272, 274 relatively quicker since the files do not need to be retrieved from the central cloud 210. In some examples, the files cached in the local file cache pool 260 correspond to previously launched/executed applications. In other examples, the files cached in the local file cache pool 260 correspond to new and/or anticipated applications that are to be launched/executed. In examples disclosed herein, the first file associated with the common layer 110 and/or the second file associated with the supplemental layer 120 may be stored in the local file cache pool 260.

For the common layer 110, the application launcher circuitry 250 checks whether files associated with the common layer 110 have been cached before (e.g., are cached locally within the local file cache pool 260). The application launcher circuitry 250 may then reuse the cached files if they exist. Alternatively, the application launcher circuitry 250 can initiate a request for the files from the remote image repository 220.

For each file associated with the supplemental layer 120, the application launcher circuitry 250 obtains a file corresponding to the hash value (either from the local file cache pool 260 or from the remote file cache pool 230). Once the file is obtained, the launcher stores the file in the local file cache pool 260 for later use. For increased efficiency, in some examples, the launcher could request all unavailable files of a layer using one request.

Once the file structure is ready, the application launcher circuitry 250 launches/executes/starts the application. In some examples, for container-based applications, more than one application may be included in a single container image. This container image contains all dependencies required by those applications. Using such an approach simplifies the building and/or release of applications. When launching one of those applications, not all files in the container image are required. As a result, it is possible to save the loading time of those unused files.

In some examples, the loading of a file is postponed until that file is required. For example, assume there is a dynamic library, "a.so". During the process of building the file structure, the application launcher circuitry 250 doesn't need to pull "a.so" from the remote file cache pool 230 even if it is not available locally. When starting an application in the container image, a file miss will happen if the library is required. At that time, the application launcher circuitry 250 will fetch "a.so" from the central cloud 210. If the library is not required during the launching of the application, no fetching operation will happen, and some bandwidth can be saved.

Such kind of post-loading may impact the launch time of applications. Since the application launcher circuitry 250 knows which application is going to be launched, the application launcher circuitry 250 can analyze the dependency of this application and fetch all required files when building the file structure. For example, for a C/C++ application, tools such as, for example, ldd, readelf, objdump, etc., may be used to get all dependencies. In this way, file misses can be reduced as much as possible and avoid the impact on the launch time of applications.

In some examples, for better performance, the local file cache pool 260 may be built on top of storage devices that satisfy two operational requirements: data persistence and high read/write performance. For example, PMem and NVMe SSD are suitable for this use case. In some examples, a CXL-based non-volatile memory pool may also be suitable for use.

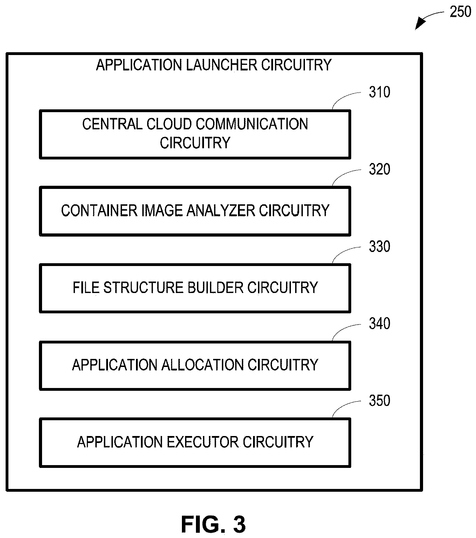

FIG. 3 is a block diagram illustrating an example implementation of the application launcher circuitry 250 of FIG. 2. The example application launcher circuitry 250 of FIG. 3 includes central cloud communication circuitry 310, container image analyzer circuitry 320, file structure builder circuitry 330, application allocation circuitry 340, and application executor circuitry 350.

The central cloud communication circuitry 310 communicates with the central cloud 210. In some examples, the central cloud communication circuitry 310 sends an instruction and/or a request to the central cloud 210 to obtain the container image 100 from the remote image repository 220. In some examples, the central cloud communication circuitry 310 sends an instruction and/or a request to the central cloud 210 to obtain a file containing a hash value associated with the supplemental layer 120 from the remote file cache pool 230.

The container image analyzer circuitry 320 analyzes the container image 100. In some examples, analyzing the container image 100 includes identifying the common layer 110 and/or the supplemental layer 120. In some examples, analyzing the container image 100 includes determining whether files and/or layers are cached in the local file cache pool 260.

The file structure builder circuitry 330 builds a file structure to launch/execute one or more applications. In some examples, each application uses a different file structure, and thus the file structure builder circuitry 330 builds a file structure for each application. In other examples, multiple applications can use a shared file structure or portions of a file structure (e.g., one or more files are shared), and the file structure builder circuitry 330 builds the file structure accounting for shared files.

The application allocation circuitry 340 allocates the files in the file structure based on the application(s) to launch/execute. In some examples, where each application utilizes an individual file structure, each file in the file structure is allocated separately. In other examples, where more than one application shares files, each unique file (e.g., each file not shared) is allocated separately and the shared files are allocated once.

The application executor circuitry 350 launches/starts the application(s). In some examples, the application executor circuitry 350 launches each application individually. Launching each application individually may be desired where a particular application is required for another application to be launched. In other examples, the application(s) are launched in parallel (e.g., at the same time).

The application launcher circuitry 250 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the application launcher circuitry 250 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

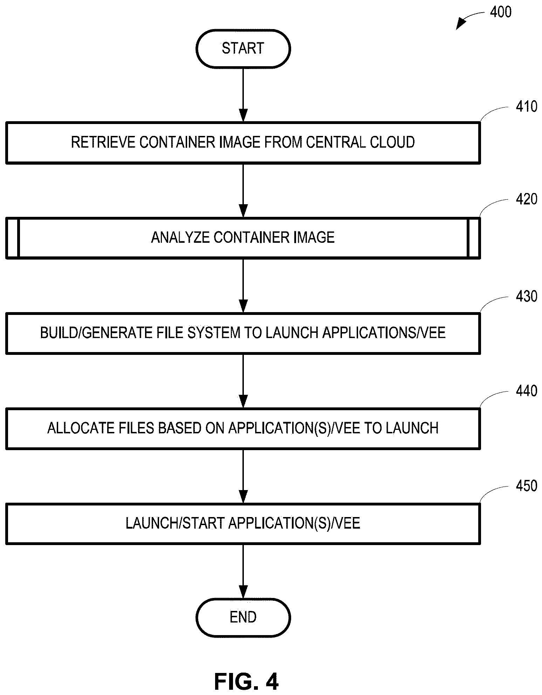

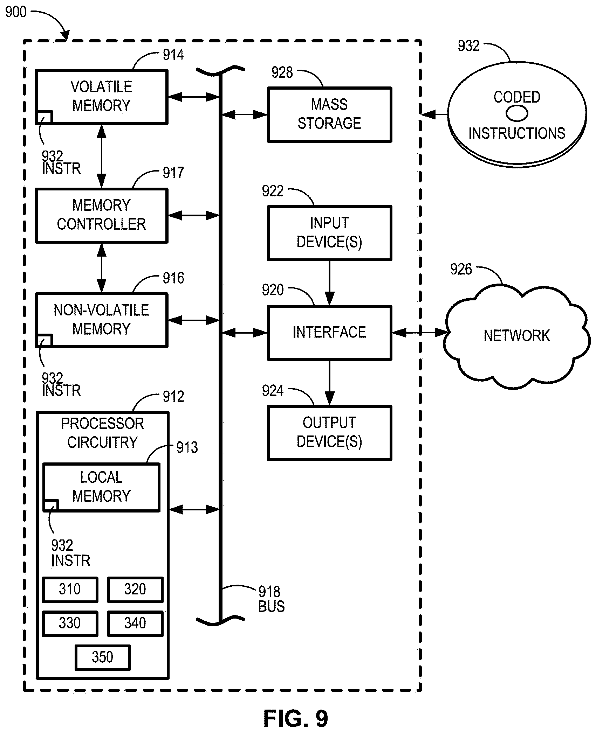

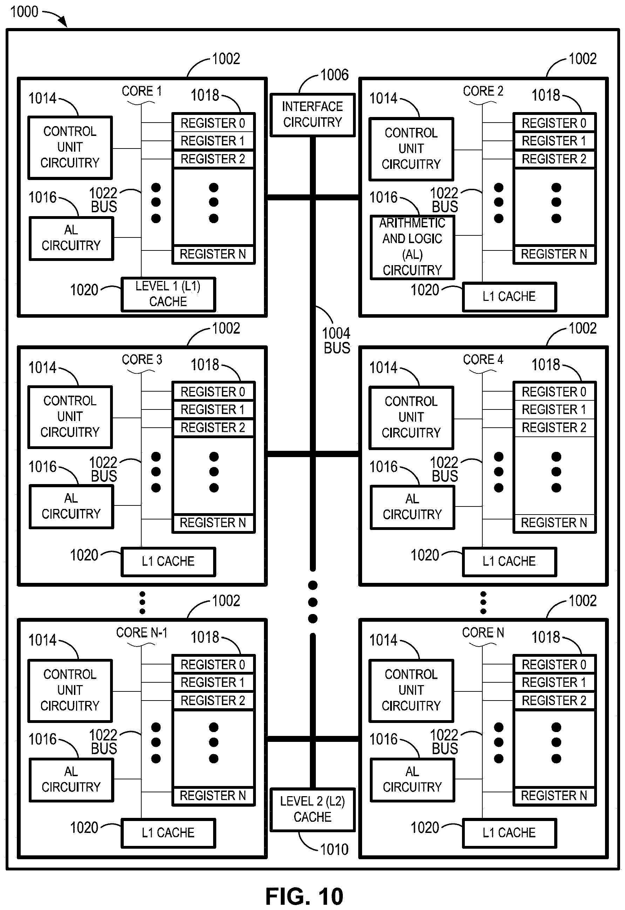

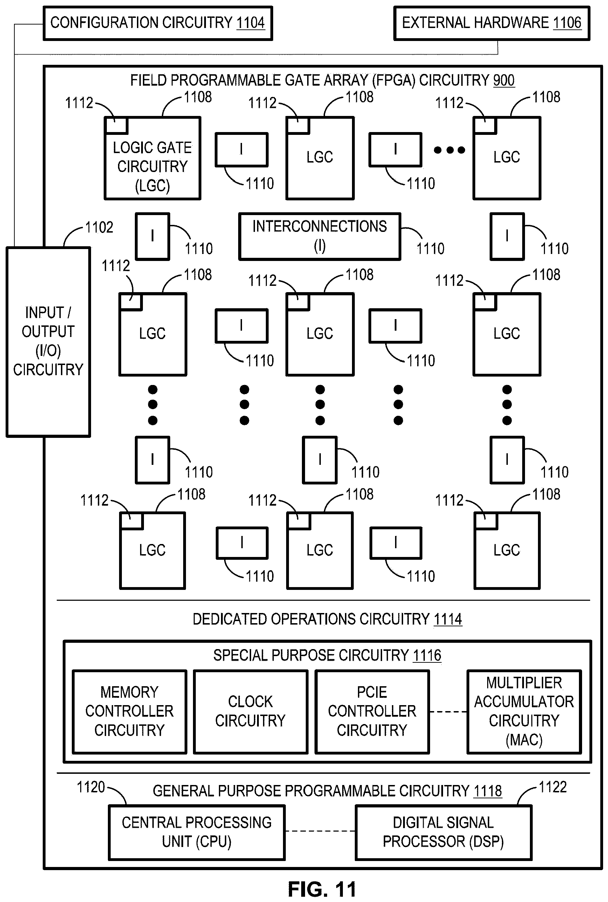

Flowchart(s) representative of example machine readable instructions, which may be executed by programmable circuitry to implement and/or instantiate the application launcher circuitry 250 of FIG. 3 and/or representative of example operations which may be performed by programmable circuitry to implement and/or instantiate the application launcher circuitry 250 of FIG. 3, are shown in FIGS. 4-5. The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA) discussed below in connection with FIGS. 10 and/or 11. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-5. many other methods of implementing the example application launcher circuitry 250 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-5 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, and/or activities, the phrase "at least one of A and B" is intended to refer to implementations including any of (1) at least one A, (2) at least one B, or (3) at least one A and at least one B. Similarly, as used herein in the context of describing the performance or execution of processes, instructions, actions, and/or activities, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions and/or example operations 400 that may be executed, instantiated, and/or performed by programmable circuitry to analyze a container image and execute/launch applications/VEE. The example machine-readable instructions and/or the example operations 400 of FIG. 4 begin at block 410, at which the central cloud communication circuitry 310 communicates with the central cloud 210 to retrieve the container image 100 from the remote repository 220. In some examples, the cloud communication circuitry 310 also communicated with the central cloud 210 to retrieve files from the remote file cache pool 230.

When the cloud communication circuitry 310 retrieves the container image 100 from the central cloud 210, the container image analyzer circuitry 320 analyzes the container image 100. (Block 420). In some examples, analyzing the container image 100 include identifying the common layers 110 and the supplemental layers 120. In some examples, analyzing the supplemental layer 120 includes collecting data from the files in the supplemental layer 120 and organizing the data using a combination of hash values and metadata.

In some examples, when the common layer 110 is analyzed, data is accessed from the common layer 110 (e.g., via the common layer data 114). Accessing this data can allow the container image analyzer circuitry 320 to determine whether files associated with the common layer 110 has been cached or needs to be retrieved from the central cloud 210.

In some examples, when the supplemental layer 120 is analyzed, one or more files are accessed from the supplemental layer 120 (e.g., via the supplemental layer data 124). Accessing the files associated with the supplemental layer 120 can allow the container image analyzer circuitry 320 to determine if the files associated with the hash value of the supplemental layer has been cached or need to be retrieved from the central cloud 210.

Once the container image analyzer circuitry 320 analyzes the container image 100, the file structure builder circuitry 330 builds/generates the file structure to launch the application(s)/VEE 270, 272, 274. (Block 430). In some examples, each application requires a unique file structure, and thus the file structure builder circuitry 330 builds/generates a file structure for each application. In examples disclosed herein, a first file associated with the common layer 110 is populated into the file structure. A second file associated with the supplemental layer 120 is used to supplement/populate the generated file structure with the second file.

Once the file structure is built by the file structure builder circuitry 330, the application allocation circuitry 340 allocates the files based on the applications/VEEs to launch. (Block 440). In some examples, the applications/VEE 270, 272, 274 use unique files, and thus each application will need to have the files allocated appropriately. In other examples, the applications 270, 272, 274 can share files needed to launch the application, and such sharing is also accounted for in the file allocation. In some examples, allocating the file structure is based on a characteristic of the application. An example of such a characteristic includes but is not limited to an amount of computing resources available (e.g., CPU operating thresholds, memory available, etc.).

Once the application allocation circuitry 340 allocates the files, the application executor circuitry 350 launches/starts the application(s) 270, 272, 274. (Block 450). In some examples, if more than one application is to be started/launched, the application executor circuitry 350 launches/starts each application individually. In other examples, the applications are started/launched at the same time (e.g., at a relatively same moment in time).

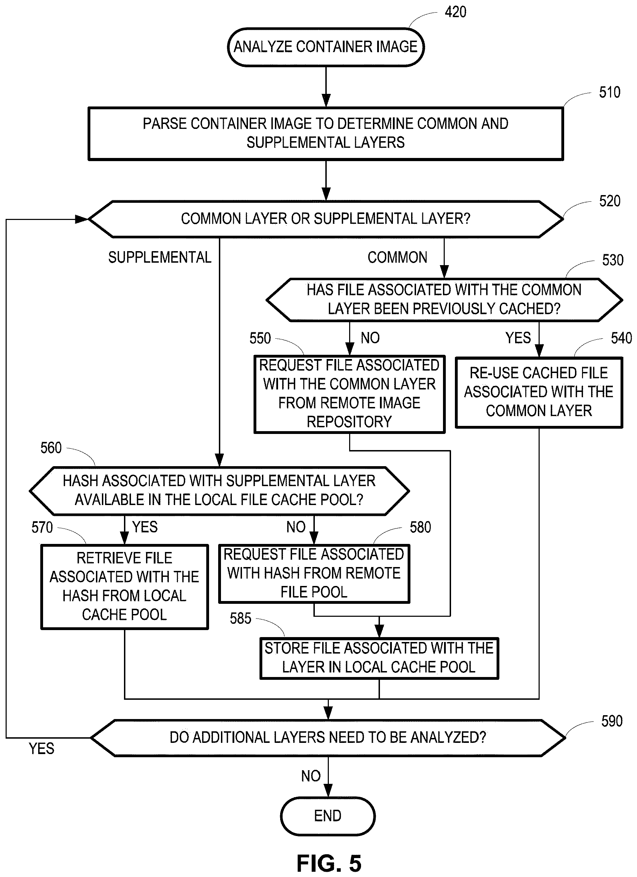

FIG. 5 is a flowchart representative of example machine readable instructions and/or example operations that may be executed, instantiated, and/or performed by programmable circuitry to analyze the container image 100. The example machine-readable instructions and/or the example operations of FIG. 5 begin at block 510, at which the container image analyzer circuitry 320 parses the container image 100 to identify the common layer 110 and the supplemental layer 120. In some examples, the identifying of the layers 110, 120 includes identifying multiple common layers 110 and multiple supplemental layers 120 in the container image 100.

Once the container image analyzer circuitry 320 identifies the common layer(s) 110 and the supplemental layer(s) 120, the container image analyzer circuitry 320 selects a layer to further analyze. (Block 520). In some examples, either the common layer 110 or the supplemental layer 120 can be analyzed (e.g., the supplemental layer 120 is not required to be analyzed after the common layer 110).

When the container image analyzer circuitry 320 determines that the common layer 110 is to be analyzed (e.g., block 520 returns a result of COMMON), the container image analyzer circuitry 320 determines whether a file associated with the common layer 110 has been previously cached. (Block 530). In some examples, as disclosed above, the file associated with the common layer 110 can be held in the local file cache pool 260 or accessed from the remote image repository 220.

When the container image analyzer circuitry 320 determines that the file associated with the common layer 110 has been previously cached (e.g., block 530 returns a result of YES), then the container image analyzer circuitry 320 re-uses the cached file associated with the common layer 110. (Block 540). In some examples, re-using the cached file associated with the common layer 110 includes accessing the file associated with the common layer 110 from the local file cache pool 260.

When the container image analyzer circuitry 320 determines that the file associated with the common layer 110 has not been previously cached (e.g., block 530 returns a result of NO, the container image analyzer circuitry 320 requests the file associated with the common layer 110 from the remote image repository 220. (Block 550). In some examples, the requesting of the file associated with the common layer 110 from the remote image repository 220 includes accessing the remote file cache pool 230. In other examples, the container image analyzer circuitry 320 can transmit an instruction to the central cloud 210 for the central cloud 210 to retrieve the file associated with the common layer 110 from the remote file cache pool 230 to send to the edge cloud 240.

When the container image analyzer circuitry 320 determines that the supplemental layer 120 is to be analyzed (e.g., block 520 returns a result of SUPPLEMENTAL), the container image analyzer circuitry 320 determines whether a file associated with a hash value of the supplemental layer 120 is present/available in the local file cache pool 260. (Block 560). In some examples, as disclosed above, the file associated with the hash value of the supplemental layer 120 can be held in the local file cache pool 260 or in the remote file cache pool 230.

When the container image analyzer circuitry 320 determines that the file associated with a hash value of the supplemental layer 120 is available/present in the local file cache pool 260 (e.g., block 560 returns a result of YES), then the container image analyzer circuitry 320 retrieves the file associated with the hash value of the supplemental layer 120 from the local file cache pool 260. (Block 570). In some examples, more than one file is associated with the hash value of the supplemental layer 120, and thus more than one file can be accessed from the local file cache pool 260.

When the container image analyzer circuitry 320 determines that the file associated with a hash value of the supplemental layer 120 is not available/present in the local file cache pool 260 (e.g., block 560 returns a result of NO), then the container image analyzer circuitry 320 requests the file associated with the hash value of the supplemental layer 120 from the remote file cache pool 230. (Block 580). In some examples, the requesting of the file associated with the hash value of the supplemental layer 120 from the remote file cache pool 230 includes accessing the remote file cache pool 230 directly (e.g., through a network connection). In other examples, the container image analyzer circuitry 320 can transmit an instruction to the central cloud 210 for the central cloud 210 to retrieve the file associated with the hash value of the supplemental layer 120 from the remote file cache pool 230 to send to the edge cloud 240.

When the container image analyzer circuitry 320 has requested the file associated with the common layer 110 from the remote image repository 220 (e.g., block 550 completes) or when the container image analyzer circuitry 320 has requested the file associated with a hash value of the supplemental layer 120 from the remote file cache pool 230 (e.g., block 580 completes), then the container image analyzer circuitry 320 stores the file associated with the common layer 110 or the file associated with the hash value of the supplemental layer 120 in the local file cache pool 260. (Block 585). In some examples, the storing of the file associated with the common layer 110 and/or the file associated with the hash value of the supplemental layer 120 in the local file cache pool 260 includes storing information regarding the layer 110, 120 and/or the file(s). Storing such information can make accessing the layer 110, 120 and/or the file(s) relatively quicker on subsequent iterations of the operations of FIG. 5.

Once the container image analyzer circuitry 320 has stored the file associated with the common layer 110 or the file associated with the hash value of the supplemental layer 120 in the local file cache pool 260 (e.g., block 585 completes), when the container image analyzer circuitry 320 re-uses the cached file associated with the common layer 110 (e.g., block 540 completes), or when the container image analyzer circuitry 320 retrieves the file associated with a hash value of the supplemental layer 120 (e.g., block 570 completes), the container image analyzer circuitry 320 determines whether additional layers need to be analyzed. (Block 590). In some examples, each layer 110, 120 is analyzed independently and may thus need to be analyzed one at a time. In some examples, the container image 100 includes multiple common layers 110 and/or multiple supplemental layers 120. As such, each layer may need to be analyzed to determine how to build the file structure to launch/execute the application(s) 270, 272, 274.

When the container image analyzer circuitry 320 determines that additional layers do need to be analyzed (e.g., block 590 returns a result of YES), the operations of blocks 520 through 585 are repeated until no remaining layers are left to analyze. When the container image analyzer circuitry 320 determines that no layers are remaining to analyze (e.g., block 590 returns a result of NO), then the example operations of FIG. 5 end and the operations of FIG. 4 resume at block 430.

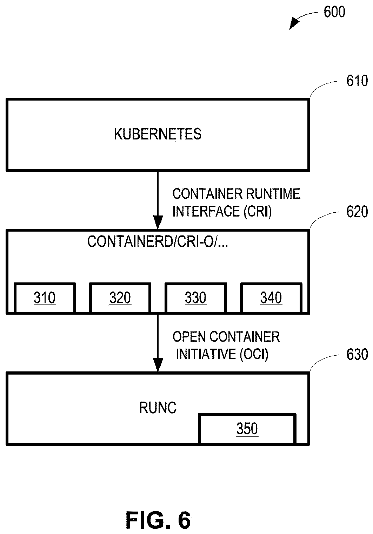

FIG. 6 is an example container image launcher 600 illustrating an overview of how some example open-source projects are structured. In the illustrated example of FIG. 6, Kubernetes, Containerd/CRI-O, and rune, are fit together to launch containers. The example of FIG. 6 includes a kernel 610, a runtime executor 620, and a container launcher 630. The example kernel 610 of FIG. 6 includes a Kubernetes kernel, but any other kernel interface can be interchangeably used herein.

The runtime executor 620 allows the Kubernetes kernel (e.g., the example kernel 610) to use a Container Runtime Interface (CRI) to interact with Containerd/CRI-O, which perform preparation tasks, such as loading image and populating container filesystem. In some examples, the runtime executor 620 interfaces with the kernel 610 to allow the Kubernetes kernel to interact with the Containerd/CRI-O. In examples disclosed herein, the central cloud communication circuitry 310, container image analyzer circuitry 320, file structure builder circuitry 330, and application allocation circuitry 340 can be housed within the runtime executor 620.

After the preparations by the runtime executor 620, Containerd/CRI-O uses Open Container Initiative (OCI) to interact with rune to launch a container. In the example of FIG. 6, the container launcher 630 launches the container. As shown in FIG. 6, the application executor circuitry 350 interacts with the runtime executor 620 to launch the container.

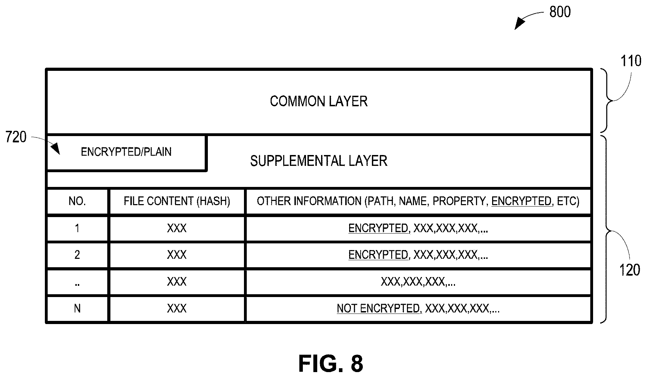

Examples disclosed herein can be integrated into existing container ecosystem(s). The key is to support the proposed container image format in compliance with CRI. In a software stack, Containerd/CRI-O is responsible for loading image and populating container filesystem. The image service module of Containerd/CRI-O may, in some examples, be extended to support a new image format as shown in FIGS. 1 and/or 8. Such modifications will be transparent for Kubernetes and runc.

In recent years, more and more applications have been deployed in the form of containers. One security concern with containers is the confidentiality of data and code within container images, which could include proprietary algorithms, machine learning models, etc. To protect these sensitive code and data, cryptography technology can be used to encrypt/decrypt these containers. However, considering the size and the amount of container images to be deployed on a particular node/host/client, intensive computing power is required for encryption/decryption of these container images, which will bring increased burden to both the host server (encrypting container images) and client (decrypting container images).

Examples disclosed herein utilize a multi-layer container image format with a security property. With the use of such a format, the encryption and decryption operations may be performed per layer and per file, which can reduce the computing requirement(s) for encryption and decryption. In some examples, a secure key management service is used to store and manage decryption keys to decrypt layers and files.

In examples disclosed herein, an objective for encryption of a container image is to protect the sensitive code and/or data included within the container image, rather than the whole container image. Encrypting a whole container image often leads to more content (e.g., code and/or data) being encrypted than is necessary to protect the sensitive code and/or data. Such over-encryption results in the use of additional computing resources (e.g., resources to encrypt and/or decrypt non-sensitive code and/or data).

As noted above, a container image (e.g., the container image 100) includes one or more layers. Bottom layers are usually an OS layer and several runtime layers with dependencies. These layers usually contain libraries and configuration files which are required for an application during runtime. These libraries and configuration files are common for all kinds of applications. Such libraries typically do not include any sensitive information. The top layer is usually an application layer. The application layer typically includes specific application and related configuration files, which, generally, should be protected if sensitive information is included.

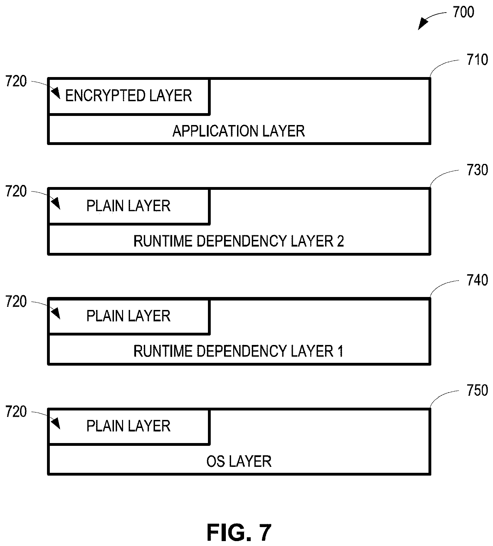

Now looking at FIG. 7, in examples disclosed herein, a "per-layer encryption" approach is utilized. FIG. 7 illustrates an example per-layer encryption approach 700, which includes a first layer 710, an encryption status 720, a second layer 730, a third layer 740, and a fourth layer 750. In the metadata section of each layer, the encryption status 720 is used to indicate whether the layer is a plain layer or an encrypted layer. Only layers that are marked with this "encrypt" field are encrypted. In the example of FIG. 7, the first layer 710 is the only layer that is encrypted while the second layer 730, third layer 740, and fourth layer 750 are plain layers.

Therefore, at a client side, only encrypted layers need to be decrypted. In this way, the decryption operation need only be performed on a smaller part of a container image. Such an approach reduces the computing resource requirements for the decryption operation at the client side. This can also reduce the computing resource requirements for encrypting the whole container image at server side. In some examples, the application layer 710 includes a secure key management service for storing and managing decryption keys. In some examples, the secure key management service is an application running within the application layer 710.

Per-layer encryption/decryption can reduce the amount of encryption/decryption computing of a container image. When examined at an application layer, in most cases, not all content in the application layer is sensitive. This makes it possible to further reduce the overhead of encryption/decryption operations.

FIG. 8 illustrates an alternative container image format 800 to the container image 100 of FIG. 1. In the illustrated example of FIG. 8, a per-layer and per-file encryption approach is used to avoid encrypting a whole container image based on the disclosed container image format (e.g., approach of FIG. 7). As shown in FIG. 7, the common layer 110 is not encrypted and the supplemental layer 120 includes the encryption status 720. In some examples, the supplemental layer data 124 includes an additional encryption parameter within the information stored in the file. With such an approach, the overhead of encryption and decryption of container images at both client and server sides will be reduced. As a result, approaches disclosed herein help achieve more rapid application deployment and improve the utilization of platforms for end users.

FIG. 9 is a block diagram of an example programmable circuitry platform 900 structured to execute and/or instantiate the example machine-readable instructions, such as the example instructions of FIGS 4-5 to implement the application launcher circuitry 250 of FIG. 3. The programmable circuitry platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements central cloud communication circuitry 310, container image analyzer circuitry 320, file structure builder circuitry 330, application allocation circuitry 340, and application executor circuitry 350.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.) or any other form of output device. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIGS. 4-5, may be stored in the mass storage device 928, in the volatile memory 914, in the non-volatile memory 916, and/or on at least one non-transitory computer readable storage medium such as a CD or DVD which may be removable.

FIG. 10 is a block diagram of an example implementation of the programmable circuitry 912 of FIG. 9. In this example, the programmable circuitry 912 of FIG. 9 is implemented by a microprocessor 1000. For example, the microprocessor 1000 may be a general-purpose microprocessor (e.g., general-purpose microprocessor circuitry). The microprocessor 1000 executes some or all of the machine-readable instructions of FIGS. 4-5 to effectively instantiate the circuitry of FIG. 3 as logic circuits to perform operations corresponding to those machine readable instructions. In some such examples, the circuitry of FIG. 3 is instantiated by the hardware circuits of the microprocessor 1000 in combination with the machine-readable instructions. For example, the microprocessor 1000 may be implemented by multi-core hardware circuitry such as a CPU, a DSP, a GPU, an XPU, etc. Although it may include any number of example cores 1002 (e.g., 1 core), the microprocessor 1000 of this example is a multi-core semiconductor device including N cores. The cores 1002 of the microprocessor 1000 may operate independently or may cooperate to execute machine readable instructions. For example, machine code corresponding to a firmware program, an embedded software program, or a software program may be executed by one of the cores 1002 or may be executed by multiple ones of the cores 1002 at the same or different times. In some examples, the machine code corresponding to the firmware program, the embedded software program, or the software program is split into threads and executed in parallel by two or more of the cores 1002. The software program may correspond to a portion or all of the machine readable instructions and/or operations represented by FIGS 4-5.

The cores 1002 may communicate by a first example bus 1004. In some examples, the first bus 1004 may be implemented by a communication bus to effectuate communication associated with one(s) of the cores 1002. For example, the first bus 1004 may be implemented by at least one of an Inter-Integrated Circuit (I2C) bus, a Serial Peripheral Interface (SPI) bus, a PCI bus, or a PCIe bus. Additionally or alternatively, the first bus 1004 may be implemented by any other type of computing or electrical bus. The cores 1002 may obtain data, instructions, and/or signals from one or more external devices by example interface circuitry 1006. The cores 1002 may output data, instructions, and/or signals to the one or more external devices by the interface circuitry 1006. Although the cores 1002 of this example include example local memory 1020 (e.g., Level 1 (L1) cache that may be split into an L1 data cache and an L1 instruction cache), the microprocessor 1000 also includes example shared memory 1010 that may be shared by the cores (e.g., Level 2 (L2 cache)) for high-speed access to data and/or instructions. Data and/or instructions may be transferred (e.g., shared) by writing to and/or reading from the shared memory 1010. The local memory 1020 of each of the cores 1002 and the shared memory 1010 may be part of a hierarchy of storage devices including multiple levels of cache memory and the main memory (e.g., the main memory 914, 916 of FIG. 9). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1002 may be referred to as a CPU, DSP, GPU, etc., or any other type of hardware circuitry. Each core 1002 includes control unit circuitry 1014, arithmetic and logic (AL) circuitry (sometimes referred to as an ALU) 1016, a plurality of registers 1018, the local memory 1020, and a second example bus 1022. Other structures may be present. For example, each core 1002 may include vector unit circuitry, single instruction multiple data (SIMD) unit circuitry, load/store unit (LSU) circuitry, branch/jump unit circuitry, floating-point unit (FPU) circuitry, etc. The control unit circuitry 1014 includes semiconductor-based circuits structured to control (e.g., coordinate) data movement within the corresponding core 1002. The AL circuitry 1016 includes semiconductor-based circuits structured to perform one or more mathematic and/or logic operations on the data within the corresponding core 1002. The AL circuitry 1016 of some examples performs integer based operations. In other examples, the AL circuitry 1016 also performs floating-point operations. In yet other examples, the AL circuitry 1016 may include first AL circuitry that performs integer-based operations and second AL circuitry that performs floating-point operations. In some examples, the AL circuitry 1016 may be referred to as an Arithmetic Logic Unit (ALU).

The registers 1018 are semiconductor-based structures to store data and/or instructions such as results of one or more of the operations performed by the AL circuitry 1016 of the corresponding core 1002. For example, the registers 1018 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1018 may be arranged in a bank as shown in FIG. 10. Alternatively, the registers 1018 may be organized in any other arrangement, format, or structure, such as by being distributed throughout the core 1002 to shorten access time. The second bus 1022 may be implemented by at least one of an I2C bus, a SPI bus, a PCI bus, or a PCIe bus.

Each core 1002 and/or, more generally, the microprocessor 1000 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1000 is a semiconductor device fabricated to include many transistors interconnected to implement the structures described above in one or more integrated circuits (ICs) contained in one or more packages.

The microprocessor 1000 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1000, in the same chip package as the microprocessor 1000 and/or in one or more separate packages from the microprocessor 1000.

FIG. 11 is a block diagram of another example implementation of the programmable circuitry 912 of FIG. 9. In this example, the programmable circuitry 912 is implemented by FPGA circuitry 1100. For example, the FPGA circuitry 1100 may be implemented by an FPGA. The FPGA circuitry 1100 can be used, for example, to perform operations that could otherwise be performed by the example microprocessor 1000 of FIG. 10 executing corresponding machine readable instructions. However, once configured, the FPGA circuitry 1100 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1000 of FIG. 10 described above (which is a general purpose device that may be programmed to execute some or all of the machine readable instructions of FIGS 4-5 but whose interconnections and logic circuitry are fixed once fabricated), the FPGA circuitry 1100 of the example of FIG. 11 includes interconnections and logic circuitry that may be configured, structured, programmed, and/or interconnected in different ways after fabrication to instantiate, for example, some or all of the operations/functions corresponding to the machine readable instructions represented by FIGS 4-5. In particular, the FPGA circuitry 1100 may be thought of as an array of logic gates, interconnections, and switches. The switches can be programmed to change how the logic gates are interconnected by the interconnections, effectively forming one or more dedicated logic circuits (unless and until the FPGA circuitry 1100 is reprogrammed). The configured logic circuits enable the logic gates to cooperate in different ways to perform different operations on data received by input circuitry. Those operations may correspond to some or all of the instructions (e.g., the software and/or firmware) represented FIGS 4-5. As such, the FPGA circuitry 1100 may be configured and/or structured to effectively instantiate some or all of the operations/functions corresponding to the machine readable instructions of FIGS 4-5 as dedicated logic circuits to perform the operations/functions corresponding to those software instructions in a dedicated manner analogous to an ASIC. Therefore, the FPGA circuitry 1100 may perform the operations/functions corresponding to the some or all of the machine readable instructions of FIGS 4-5 faster than the general-purpose microprocessor can execute the same.

In the example of FIG. 11, the FPGA circuitry 1100 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

The FPGA circuitry 1100 of FIG. 11, includes example input/output (I/O) circuitry 1102 to obtain and/or output data to/from example configuration circuitry 1104 and/or external hardware 1106. For example, the configuration circuitry 1104 may be implemented by interface circuitry that may obtain a binary file, which may be implemented by a bit stream, data, and/or machine-readable instructions, to configure the FPGA circuitry 1100, or portion(s) thereof. In some such examples, the configuration circuitry 1104 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1106 may be implemented by external hardware circuitry. For example, the external hardware 1106 may be implemented by the microprocessor 1000 of FIG. 10.

The FPGA circuitry 1100 also includes an array of example logic gate circuitry 1108, a plurality of example configurable interconnections 1110, and example storage circuitry 1112. The logic gate circuitry 1108 and the configurable interconnections 1110 are configurable to instantiate one or more operations/functions that may correspond to at least some of the machine readable instructions of FIGS 4-5 and/or other desired operations. The logic gate circuitry 1108 shown in FIG. 11 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1108 to enable configuration of the electrical structures and/or the logic gates to form circuits to perform desired operations/functions. The logic gate circuitry 1108 may include other electrical structures such as look-up tables (LUTs), registers (e.g., flip-flops or latches), multiplexers, etc.

The configurable interconnections 1110 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1108 to program desired logic circuits.

The storage circuitry 1112 of the illustrated example is structured to store result(s) of the one or more of the operations performed by corresponding logic gates. The storage circuitry 1112 may be implemented by registers or the like. In the illustrated example, the storage circuitry 1112 is distributed amongst the logic gate circuitry 1108 to facilitate access and increase execution speed.

The example FPGA circuitry 1100 of FIG. 11 also includes example dedicated operations circuitry 1114. In this example, the dedicated operations circuitry 1114 includes special purpose circuitry 1116 that may be invoked to implement commonly used functions to avoid the need to program those functions in the field. Examples of such special purpose circuitry 1116 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1100 may also include example general purpose programmable circuitry 1118 such as an example CPU 1120 and/or an example DSP 1122. Other general purpose programmable circuitry 1118 may additionally or alternatively be present such as a GPU, an XPU, etc., that can be programmed to perform other operations.

Although FIGS. 10 and 11 illustrate two example implementations of the programmable circuitry 912 of FIG. 9, many other approaches are contemplated. For example, FPGA circuitry may include an on-board CPU, such as one or more of the example CPU 1120 of FIG. 11. Therefore, the programmable circuitry 912 of FIG. 9 may additionally be implemented by combining at least the example microprocessor 1000 of FIG. 10 and the example FPGA circuitry 1100 of FIG. 11. In some such hybrid examples, one or more cores 1002 of FIG. 10 may execute a first portion of the machine readable instructions of FIGS 4-5 to perform first operation(s)/function(s), the FPGA circuitry 1100 of FIG. 11 may be configured and/or structured to perform second operation(s)/function(s) corresponding to a second portion of the machine readable instructions of FIGS 4-5, and/or an ASIC may be configured and/or structured to perform third operation(s)/function(s) corresponding to a third portion of the machine readable instructions represented by FIGS 4-5.

It should be understood that some or all of the circuitry of FIG. 3 may, thus, be instantiated at the same or different times. For example, same and/or different portion(s) of the microprocessor 1000 of FIG. 10 may be programmed to execute portion(s) of machine-readable instructions at the same and/or different times. In some examples, same and/or different portion(s) of the FPGA circuitry 1100 of FIG. 11 may be configured and/or structured to perform operations/functions corresponding to portion(s) of machine-readable instructions at the same and/or different times.

In some examples, some or all of the circuitry of FIG. 3 may be instantiated, for example, in one or more threads executing concurrently and/or in series. For example, the microprocessor 1000 of FIG. 10 may execute machine readable instructions in one or more threads executing concurrently and/or in series. In some examples, the FPGA circuitry 1100 of FIG. 11 may be configured and/or structured to carry out operations/functions concurrently and/or in series. Moreover, in some examples, some or all of the circuitry of FIG. 3 may be implemented within one or more virtual machines and/or containers executing on the microprocessor 1000 of FIG. 10.

In some examples, the programmable circuitry 912 of FIG. 9 may be in one or more packages. For example, the microprocessor 1000 of FIG. 10 and/or the FPGA circuitry 1100 of FIG. 11 may be in one or more packages. In some examples, an XPU may be implemented by the programmable circuitry 912 of FIG. 9, which may be in one or more packages. For example, the XPU may include a CPU (e.g., the microprocessor 1000 of FIG. 10, the CPU 1120 of FIG. 11, etc.) in one package, a DSP (e.g., the DSP 1122 of FIG. 11) in another package, a GPU in yet another package, and an FPGA (e.g., the FPGA circuitry 1100 of FIG. 11) in still yet another package.

From the foregoing, it will be appreciated that example systems, apparatus, articles of manufacture, and methods have been disclosed that facilitate deployment of containers in a network-constrained environment. Disclosed systems, apparatus, articles of manufacture, and methods improve the efficiency of using a computing device by reducing the amount of information that must be transmitted to enable execution of a container. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to facilitate deployment of containers in a network-constrained environment are disclosed herein. Further examples and combinations thereof include the following:
Example 1 includes an apparatus comprising interface circuitry, machine readable instructions, and programmable circuitry to at least one of instantiate or execute the machine readable instructions to access a first unencrypted shared file, access a second encrypted file, create a third file by integrating contents of the first file and the second file, the third file being a Virtual Execution Environment (VEE) image store the third file, and deploy the third file to a container runtime environment for execution.
Example 2 includes the apparatus of example 1, wherein the programmable circuitry is further to decrypt the second file to produce a decrypted second file before integration of contents of the first file and the second file to create the third file.
Example 3 includes the apparatus of example 2, wherein to decrypt the second file, the programmable circuitry is to use a decryption key obtained from a secure key management service.
Example 4 includes the apparatus of any of examples 1-3, wherein to access the first file and the second file, the programmable circuitry is to retrieve the first file and the second file from a distributed file system.
Example 5 includes the apparatus of any of examples 1-4, wherein the second file is associated with a supplemental layer of the third file, the supplemental layer including one or more files that are not shared across a plurality of computing devices.
Example 6 includes the apparatus of any of examples 1-5, wherein the first file is associated with a common layer of the third file, the common layer to be shared by more than one computing device.
Example 7 includes the apparatus of any of examples 1-6, wherein the third file includes a computed identifier of the second file.
Example 8 includes the apparatus of example 7, wherein the computed identifier is a hash.
Example 9 includes the apparatus of any of examples 1-8, wherein the VEE image is at least one of a container image, a virtual machine, or an operating system.
Example 10 includes At least one non-transitory computer-readable storage medium comprising instructions that cause at least one processor to at least access a first unencrypted shared file, access a second encrypted file, create a third file by integrating contents of the first file and the second file, the third file being a Virtual Execution Environment (VEE) image store the third file, and deploy the third file to a container runtime environment for execution.
Example 11 includes the at least one non-transitory computer-readable storage medium of example 10, wherein the instructions cause the at least one processor to decrypt the second file to produce a decrypted second file before integration of contents of the first file and the second file to create the third file.
Example 12 includes the at least one non-transitory computer-readable storage medium of example 11, wherein to decrypt the second file, the programmable circuitry is to use a decryption key obtained from a secure key management service.
Example 13 includes the at least one non-transitory computer-readable storage medium of any of examples 10-12, wherein to access the first file and the second file, the instructions cause the at least one processor to retrieve the first file and the second file from a distributed file system.
Example 14 includes the at least one non-transitory computer-readable storage medium of any of examples 10-13, wherein the second file is associated with a supplemental layer of the third file, the supplemental layer including one or more files that are not shared across a plurality of computing devices.
Example 15 includes the at least one non-transitory computer-readable storage medium of any of examples 10-14, wherein the first file is associated with a common layer of the third file, the common layer to be shared by more than one computing device.
Example 16 includes the at least one non-transitory computer-readable storage medium of any of examples 10-15, wherein the third file includes a computed identifier of the second file.
Example 17 includes the at least one non-transitory computer-readable storage medium of example 16, wherein the computed identifier is a hash.
Example 18 includes the at least one non-transitory computer-readable storage medium of any of examples 10-17, wherein the VEE image is at least one of a container image, a virtual machine, or an operating system.
Example 19 includes a method comprising accessing a first unencrypted shared file, accessing a second encrypted file, creating a third file by integrating contents of the first file and the second file, the third file being a Virtual Execution Environment (VEE) image storing the third file, and deploying the third file to a container runtime environment for execution.
Example 20 includes the method of example 19, further including decrypting the second file to produce a decrypted second file before integration of contents of the first file and the second file to create the third file.
Example 21 includes the method of example 20, further including using a decryption key obtained from a secure key management service to decrypt the second file.
Example 22 includes the method of any of examples 19-21, wherein the accessing of the first file and the second file includes retrieving the first file and the second file from a distributed file system.
Example 23 includes the method of any of examples 19-22, wherein the second file is associated with a supplemental layer of the third file, the supplemental layer including one or more files that are not shared across a plurality of computing devices.
Example 24 includes the method of any of examples 19-23, wherein the first file is associated with a common layer of the third file, the common layer to be shared by more than one computing device.
Example 25 includes the method of any of examples 19-24, wherein the third file includes a computed identifier of the second file.
Example 26 includes the method of example 25, wherein the computed identifier is a hash.
Example 27 includes the method of any of examples 19-26, wherein the VEE image is at least one of a container image, a virtual machine, or an operating system.
Example 28 includes an apparatus comprising interface circuitry, machine readable instructions, and programmable circuitry to at least one of instantiate or execute the machine readable instructions to process a request to access a data structure, the data structure including a common layer and a supplemental layer, the common layer associated with a first file to be used in creation of a local file structure, the supplemental layer associated with a second file to be used to supplement the local file structure to implement a Virtual Execution Environment (VEE) image, and cause the interface circuitry to transmit the data structure to an external device.
Example 29 includes the apparatus of example 28, wherein the supplemental layer includes a computed identifier of the second file.
Example 30 includes the apparatus of example 29, wherein the computed identifier is a hash.
Example 31 includes the apparatus of any of examples 28-30, wherein the VEE image is at least one of a container image, a virtual machine, or an operating system.
Example 32 includes the apparatus of any of examples 28-31, wherein the programmable circuitry is to store the data structure in a file cache, the file cache to be accessible by the external device to implement the VEE image.
Example 33 includes a non-transitory machine readable storage medium comprising instructions to cause programmable circuitry to at least process a request to access a data structure, the data structure including a common layer and a supplemental layer, the common layer associated with a first file to be used in creation of a local file structure, the supplemental layer associated with a second file to be used to supplement the local file structure to implement a Virtual Execution Environment (VEE) image, and cause transmission of the data structure to an external device.
Example 34 includes the non-transitory machine readable storage medium of example 33, wherein the supplemental layer includes a computed identifier of the second file.
Example 35 includes the non-transitory machine readable storage medium of example 34, wherein the computed identifier is a hash.
Example 36 includes the non-transitory machine readable storage medium of any of examples 33-35, wherein the VEE image is at least one of a container image, a virtual machine, or an operating system.
Example 37 includes the non-transitory machine readable storage medium of any of examples 33-36, wherein the instructions cause the programmable circuitry to store the data structure in a file cache, the file cache to be accessible by the external device to implement the VEE image.
Example 38 includes a method comprising processing a request to access a data structure, the data structure including a common layer and a supplemental layer, the common layer associated with a first file to be used in creation of a local file structure, the supplemental layer associated with a second file to be used to supplement the local file structure to implement a Virtual Execution Environment (VEE) image, and causing transmission of the data structure to an external device.
Example 39 includes the method of example 38, wherein the supplemental layer includes a computed identifier of the second file.
Example 40 includes the method of example 39, wherein the computed identifier is a hash.
Example 41 includes the method of any of examples 38-40, wherein the VEE image is at least one of a container image, a virtual machine, or an operating system.
Example 42 includes the method of any of examples 38-41, further including storing the data structure in a file cache, the file cache to be accessible by the external device to implement the VEE image.
Example 43 includes an apparatus comprising interface circuitry to obtain a data structure, machine readable instructions, and programmable circuitry to at least one of instantiate or execute the machine readable instructions to generate a local file structure based on a first file associated with a common layer of the data structure, and populate the local file structure with a second file associated with a supplemental layer of the data structure, the second file to facilitate supplementation of the local file structure to implement a Virtual Execution Environment (VEE) image.
Example 44 includes the apparatus of example 43, wherein the supplemental layer includes a hash of the second file.
Example 45 includes the apparatus of example 43 or 44, wherein the VEE image is at least one of a container image, a virtual machine, or an operating system.
Example 46 includes the apparatus of any of examples 43-45, wherein the programmable circuitry is to determine whether the first file associated with the common layer and the second file associated with the supplemental layer are cached in a local file cache.
Example 47 includes the apparatus of example 46, wherein the programmable circuitry is to cause retrieval of the second file from the local file cache when it is determined that the second file associated with the supplemental layer is cached in the local file cache, the determination that the second file is cached based on a computed identifier of the second file, the computed identifier included in the supplemental layer.
Example 48 includes the apparatus of example 46, wherein the programmable circuitry is to cause retrieval of the second file from a remote file cache when it is determined that the second file is not cached in the local file cache.
Example 49 includes the apparatus of any of examples 43-48, wherein the programmable circuitry is to execute the VEE image based on the data structure including the first file associated with the common layer and the second file associated with the supplemental layer.
Example 50 includes a non-transitory machine readable storage medium comprising instructions to cause programmable circuitry to at least generate a local file structure based on a first file associated with a common layer of a data structure, and populate the local file structure with a second file associated with a supplemental layer of the data structure, the second file to facilitate supplementation of the local file structure to implement a Virtual Execution Environment (VEE) image.
Example 51 includes the non-transitory machine readable storage medium of example 50, wherein the supplemental layer includes a hash of the second file.
Example 52 includes the non-transitory machine readable storage medium of example 50 or 51, wherein the VEE image is at least one of a container image, a virtual machine, or an operating system.
Example 53 includes the non-transitory machine readable storage medium of any of examples 50-52, wherein the instructions cause the programmable circuitry to determine whether the first file associated with the common layer and the second file associated with the supplemental layer are cached in a local file cache.
Example 54 includes the non-transitory machine readable storage medium of example 53, wherein the instructions cause the programmable circuitry to cause retrieval of the second file from the local file cache when it is determined that the second file associated with the supplemental layer is cached in the local file cache, the determination that the second file is cached based on a computed identifier of the second file, the computed identifier included in the supplemental layer.
Example 55 includes the non-transitory machine readable storage medium of example 53, wherein the instructions cause the programmable circuitry to cause retrieval of the second file from a remote file cache when it is determined that the second file is not cached in the local file cache.
Example 56 includes the non-transitory machine readable storage medium of any of examples 50-55, wherein the instructions cause the programmable circuitry to execute the VEE image based on the data structure including the first file associated with the common layer and the second file associated with the supplemental layer.
Example 57 includes a method comprising generating a local file structure based on a first file associated with a common layer of a data structure, and populating the local file structure with a second file associated with a supplemental layer of the data structure, the second file to facilitate supplementation of the local file structure to implement a Virtual Execution Environment (VEE) image.
Example 58 includes the method of example 57, wherein the supplemental layer includes a hash of the second file.
Example 59 includes the method of example 57 or 58, wherein the VEE image is at least one of a container image, a virtual machine, or an operating system.
Example 60 includes the method of any of examples 57-59, further including determining whether the first file associated with the common layer and the second file associated with the supplemental layer are cached in a local file cache.
Example 61 includes the method of example 60, further including causing retrieval of the second file from the local file cache when it is determined that the second file associated with the supplemental layer is cached in the local file cache, the determination that the second file is cached based on a computed identifier of the second file, the computed identifier included in the supplemental layer.
Example 62 includes the method of example 60, further including causing retrieval of the second file from a remote file cache when it is determined that the second file is not cached in the local file cache.
Example 63 includes the method of any of examples 57-62, further including executing the VEE image based on the data structure including the first file associated with the common layer and the second file associated with the supplemental layer.
Example 64 includes At least one non-transitory computer readable medium comprising a data structure, the data structure including a common layer associated with first instructions for creation of a local file structure, and a supplemental layer associated with second instructions to be used to supplement the local file structure, the second instructions to facilitate supplementation of the local file structure to implement a Virtual Execution Environment (VEE) image.
Example 65 includes the at least one non-transitory computer readable medium of example 64, wherein the supplemental layer includes a computed identifier associated with the second instructions.
Example 66 includes the at least one non-transitory computer readable medium of example 65, wherein the computed identifier is a hash.
Example 67 includes the at least one non-transitory computer readable medium of any of examples 64-66, wherein the VEE image is at least one of a container image, a virtual machine, or an operating system.
Example 68 includes an apparatus comprising interface circuitry, machine readable instructions, and programmable circuitry to at least one of instantiate or execute the machine readable instructions to populate a common layer of a data structure corresponding to a first file to be used to create a local file structure, populate a supplemental layer of the data structure corresponding to a second file to facilitate supplementation of the local file structure to implement a Virtual Execution Environment (VEE) image, and cause the interface circuitry to transmit the data structure for use by an external device.
Example 69 includes the apparatus of example 68, wherein the supplemental layer includes a computed identifier of the second file.
Example 70 includes the apparatus of example 69, wherein the computed identifier is a hash.
Example 71 includes the apparatus of any of examples 68-70, wherein the VEE image is at least one of a container image, a virtual machine, or an operating system.
Example 72 includes the apparatus of any of examples 68-71, wherein the programmable circuitry is to store the data structure in a file cache, the file cache to be accessible by the external device to implement the VEE image.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine readable instructions; and
programmable circuitry to at least one of instantiate or execute the machine readable instructions to:
access a first unencrypted shared file;
access a second encrypted file;
create a third file by integrating contents of the first file and the second file, the third file being a Virtual Execution Environment (VEE) image;
store the third file; and
deploy the third file to a container runtime environment for execution.

2. The apparatus of claim 1, wherein the programmable circuitry is further to decrypt the second file to produce a decrypted second file before integration of contents of the first file and the second file to create the third file.

3. The apparatus of claim 2, wherein to decrypt the second file, the programmable circuitry is to use a decryption key obtained from a secure key management service.

4. The apparatus of any preceding claim, wherein to access the first file and the second file, the programmable circuitry is to retrieve the first file and the second file from a distributed file system.

5. The apparatus of any preceding claim, wherein the second file is associated with a supplemental layer of the third file, the supplemental layer including one or more files that are not shared across a plurality of computing devices.

6. The apparatus of any preceding claim, wherein the first file is associated with a common layer of the third file, the common layer to be shared by more than one computing device.

7. The apparatus of any preceding claim, wherein the third file includes a computed identifier of the second file.

8. The apparatus of claim 7, wherein the computed identifier is a hash.

9. The apparatus of any preceding claim, wherein the VEE image is at least one of a container image, a virtual machine, or an operating system.

10. A method comprising:
accessing a first unencrypted shared file;
accessing a second encrypted file;
creating a third file by integrating contents of the first file and the second file, the third file being a Virtual Execution Environment (VEE) image;
storing the third file; and
deploying the third file to a container runtime environment for execution.

11. The method of claim 10, further including decrypting the second file to produce a decrypted second file before integration of contents of the first file and the second file to create the third file.

12. The method of claim 11, further including using a decryption key obtained from a secure key management service to decrypt the second file.

13. The method of any preceding claim, wherein the accessing of the first file and the second file includes retrieving the first file and the second file from a distributed file system.

14. The method of any preceding claim, wherein the second file is associated with a supplemental layer of the third file, the supplemental layer including one or more files that are not shared across a plurality of computing devices.

15. Machine-readable storage including machine-readable instructions, when executed, to implement a method or realize an apparatus as claimed in any preceding claim.
